# EUROPÄISCHE PATENTSCHRIFT

(11) **EP 1 205 486 B1**
(45) Veröffentlichungstag und Bekanntmachung des Hinweises auf die Patenterteilung: **11.02.2004**
(21) Anmeldenummer: 01126101.3
(22) Anmeldetag: 02.11.2001
(51) Int. Cl.: C07F 9/53

(54) **Verbessertes Verfahren zur Herstellung von enantiomerenreinen (5,5'-Dichlor-6,6'-dimethoxybiphenyl-2,2'-diyl)-bis-(diphenylphosphinoxiden)**
Improved method for the preparation of enantiomerically pure (5,5'-dichloro-6,6'-dimethoxybiphenyl-2,2'-diyl)-bis-(diphenylphosphine oxides)
Procédé amélioré pour la préparation de (5,5'-dichlor-6,6'-diméthoxybiphényle-2,2'-diyl)-bis-(diphénylphosphineoxides)

(30) Priorität: 14.11.2000 DE 10056310
(43) Veröffentlichungstag der Anmeldung: 15.05.2002
(73) Patentinhaber: Bayer Chemicals AG, 51368 Leverkusen (DE)
(72) Erfinder: Pohl, Torsten, Dr., 50670 Köln (DE); Prinz, Thomas, Dr., 51371 Leverkusen (DE); Giffels, Guido, Dr., 53177 Bonn (DE); Sirges, Wolfgram, Dr., 40597 Düsseldorf (DE)

(56) Entgegenhaltungen:
- EP-A- 0 749 973
- WO-A-92/16535
- US-A- 4 556 740
- US-A- 5 510 503
- SCHMID, RUDOLF ET AL: "Axially dissymmetric diphosphines in the biphenyl series: synthesis of (6,6'-dimethoxybiphenyl-2,2'-diyl)bis(diph enylphosphine) ('MeO-BIPHEP') and analogs via an ortho-lithiation/iodination Ullmann-reaction approach" HELV. CHIM. ACTA (1991), 74(2), 370-89 , XP002097708

## Beschreibung

Die vorliegende Erfindung betrifft ein verbessertes Verfahren zur Herstellung der im Titel angegebenen Bis-diphenylphosphinoxide ausgehend von 5-Brom-2-chlor-anisol und Phosphoroxychloriden des Typs O=P(Phenyl)₂(Cl).

Derartige Bis-diphenylphosphinoxide lassen sich zu den entsprechenden Bis-diphenylphosphinen reduzieren, die als Liganden für Metallkomplexe verwendet werden. Solche Metallkomplexe ihrerseits sind als Katalysatoren für enantioselektive Hydrierungen von Bedeutung (siehe DE-A1-195 22 293 bzw. die entsprechenden US-A 5 710 339 und 5 801 261).

Ebenfalls aus dieser Literatur ist ein mehrstufiges Verfahren zur Herstellung von enantiomerenreinen (5,5'-Dichlor-6,6'-dimethoxybiphenyl-2,2'-diyl)-bis-(diphenylphosphinoxiden) bekannt. Dabei setzt man in einer ersten Stufe 5-Brom-2-chloranisol nach einer selektiven Monometallierung mit einem Phosphoroxychlorid des Typs O=P(Phenyl)₂(Cl) um und erhält so ein (4-Chlor-3-methoxyphenyl)-diphenylphosphinoxid. Die Metallierung wird mit Magnesium in Tetrahydrofuran vorgenommen, das Phosphoroxychlorid als Lösung in Tetrahydrofuran eingesetzt und das Produkt durch Einengen einer Lösung in Methylenchlorid und Ausrühren mit tert.-Butyl-methylether isoliert. Es fällt in einer Ausbeute von 70 % an.

In einer zweiten Stufe wird das (4-Chlor-3-methoxy-phenyl)-diphenylphosphinoxid in die entsprechende 2-Iodverbindung überführt. Dazu wird zu einer Lösung des Ausgangsphosphinoxids in Tetrahydrofuran bei -70°C Lithiumdiisopropylamid gelöst in Tetrahydrofuran zugegeben, auf 0°C erwärmt, auf -76°C abgekühlt und dann bei dieser Temperatur eine Lösung von Iod in Tetrahydrofuran zugetropft. Die Aufarbeitung erfolgt durch eine Behandlung mit wässriger Natriumsulfit-Lösung, anschließende Extraktion mit Essigester und Abziehen des Extraktionsmittels. Man erhält das Produkt in einer Ausbeute von 80 %.

In einer dritten Stufe wird das (4-Chlor-2-iod-3-methoxyphenyl)-diphenylphosphinoxid mit Kupferpulver in Dimethylformamid im Verlaufe von 16 Stunden zu racemischem (5,5'-Dichlor-6,6'-dimethoxybiphenyl-2,2'-diyl)-bis-(diphenylphosphinoxid) umgesetzt. Dessen Isolierung erfolgt durch Filtration, Entfernung des Dimethylformamids aus dem Filtrat und Ausrühren mit tert.-Butyl-methylether.

Schließlich wird in einer vierten Stufe das racemische (5,5'-Dichlor-6,6'-dimethoxybiphenyl-2,2-diyl)-bis-(diphenylphosphinoxid) mit enantiomerenreinen Mono- oder Dicarbonsäuren in seine Enantiomere aufgetrennt. Dabei müssen nacheinander beide Formen enantiomerenreiner Mono- oder Dicarbonsäure eingesetzt und umständliche Extraktionen und Filtrationen durchgeführt werden.

Das bekannte Gesamtverfahren zur Herstellung der Bis-diphenylphosphinoxide ist nachteilig, für die Anwendung in größeren Maßstab wenig geeignet und unwirtschaftlich, weil es Produkte mit unbefriedigenden Ausbeuten liefert, vielerlei, teils toxische Lösungsmittel benötigt, verfahrenstechnisch sehr kompliziert ist, die Anwendung von sehr tiefen Temperaturen (bis zu -76°C) und lange Reaktionszeiten erfordert und große Mengen an Lösungsmitteln und Hilfsstoffen einzusetzen sind.

Es besteht also noch das Bedürfnis nach einem Verfahren zur Herstellung solcher Bis-diphenylphosphinoxide, mit dem diese auf einfachere, effizientere und kostengünstigere Weise zugänglich sind und mit dem auch eine Herstellung in größerem Maßstab problemlos durchzuführen ist.

Es wurde nun ein Verfahren zur Herstellung von enantiomerenreinen Bis-diphenylphosphinoxiden der Formel (I) gefunden 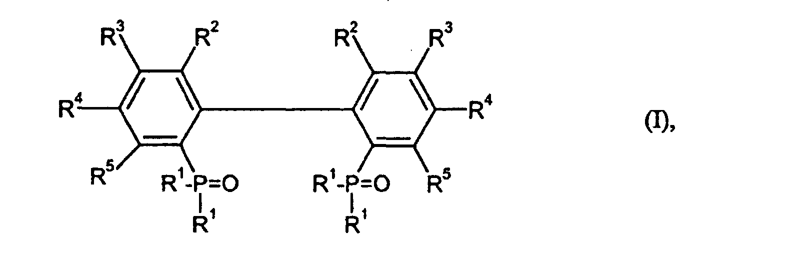 in der
- R¹: für Phenyl, Naphthyl, Heteroaryl mit 4 oder 5 C-Atomen und 1 oder 2 Heteroatomen aus der Gruppe Stickstoff, Sauerstoff und Schwefel oder Cyclohexyl steht, die gegebenenfalls mit R', OR', NO₂, NH₂, NHR' oder NR'₂ substituiert sein können, wobei R' jeweils C₁-C₆-Alkyl bedeutet,
- R²: für C₁-C₄-Alkoxy steht,
- R³: für Waserstoff, Fluor, Chlor oder Brom steht und
- R⁴ und R⁵: unabhängig voneinander für Wasserstoff, Fluor, Chlor, Brom, C₁-C₆-Alkyl oder C₁-C₆-Alkoxy stehen,
bei dem man in einer ersten Stufe eine Bromverbindung der Formel 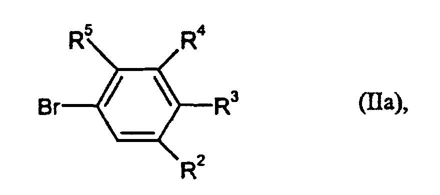 in der
- R² bis R⁵: die bei Formel (I) angegebenen Bedeutungen haben,
nach einer selektiven Monometallierung mit einem Diphenylphosphinsäurechlorid der Formel (II) umsetzt 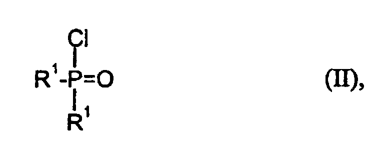 in der
- R¹: die bei Formel (I) angegebene Bedeutung hat,
so ein Diphenylphosphinoxid der Formel (III) erhält 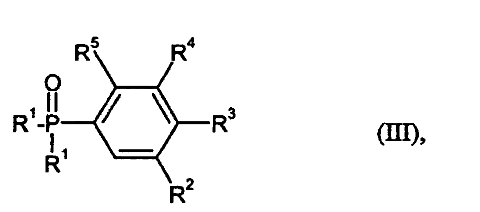 in der
- R¹ bis R⁵: die bei Formel (I) angegebenen Bedeutungen haben,
dieses in einer zweiten Stufe in 6-Position metalliert, mit Iod umsetzt und so ein 2-Iod-diphenylphosphinoxid der Formel (IV) erhält 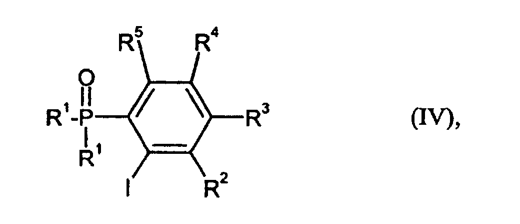 in der
- R¹ bis R⁵: die bei Formel (I) angegebenen Bedeutungen haben,
dieses in einer dritten Stufe mit Kupfer in ein racemisches Bis-diphenylphosphinoxid der Formel (I) überführt und in einer vierten Stufe das racemische Bis-diphenylphosphinoxid der Formel (I) durch Kristallisation mit enantiomerenreinen Monooder Dicarbonsäuren in seine Enantiomere auftrennt,
das dadurch gekennzeichnet ist, dass man
in der ersten Stufe als Lösungsmittel ein Gemisch von Tetrahydrofuran und einem aromatischen Kohlenwasserstoff und das Diphenylphosphinsäurechlorid der Formel (II) ohne Lösungsmittel einsetzt und das hergestellte Diphenylphosphinoxid der Formel (III) aus einer Lösung in einem aromatischen Kohlenwasserstoff durch Zusatz eines gesättigten aliphatischen Kohlenwasserstoffs isoliert,
in der zweiten Stufe Temperaturen von nicht tiefer als -25°C anwendet, das metallierte Diphenylphosphinoxid der Formel (III) und Iod simultan so eindosiert, dass stets eine geringe Menge Iod im Überschuss vorhanden ist, und das hergestellte 2-Iod-diphenylphosphinoxid gelöst in einem aromatischen Kohlenwasserstoff abtrennt,
in der dritten Stufe dendritisches Kupfer und als Lösungsmittel einen aromatischen Kohlenwasserstoff einsetzt und das hergestellte racemische Bis-diphenylphosphinoxid der Formel (I) aus einer Lösung in einem aromatischen Kohlenwasserstoff kristallisiert und
in der vierten Stufe nur einmal eine enantiomerenreine Mono- oder Dicarbonsäure einsetzt, das erste Enantiomer durch Kristallisation aus einer Lösung in einem aromatischen Kohlenwasserstoff und das zweite Enantiomer durch Hydrolyse und anschließende Kristallisation aus einer Lösung in einem aromatischen Kohlenwasserstoff gewinnt.

In den Formeln (I) bis (IV) steht R¹ vorzugsweise für unsubstituiertes Phenyl, unsubstituiertes Naphthyl, Heteroaryl mit 4 oder 5 C-Atomen und 1 oder 2 Heteroatomen aus der Gruppe Sauerstoff und Schwefel oder unsubstituiertes Cyclohexyl.

In den Formeln (I), (IIa), (III) und (IV) stehen
- R²: vorzugsweise für Methoxy,
- R³: vorzugsweise für Fluor, Chlor oder Brom, insbesondere für Chlor und
- R⁴ und R⁵: vorzugsweise für Wasserstoff.

Bei aromatischen Kohlenwasserstoffen kann es sich beispielsweise um Benzol, Toluol oder Xylole handeln. Bevorzugt ist Toluol.

Bei gesättigten aliphatischen Kohlenwasserstoffen kann es sich beispielsweise um solche mit Siedepunkten von über 30°C (bei Normaldruck) handeln. Bevorzugt sind geradkettige oder verzweigte Pentane, Hexane, Heptane und Octane.

Besonders bevorzugt ist n-Pentan.

In der ersten Stufe kann man die Metallierung z.B. mittels Magnesium durchführen, das man gegebenenfalls, z.B. durch Zusatz von wenig Iod, aktivieren kann. Für die Metallierung kann man, bezogen auf 1 Mol Bromverbindung der Formel (IIa), beispielsweise 1 bis 1,5 Mol Magnesium einsetzen. Das einzusetzende Lösungsmittelgemisch kann beispielsweise 20 bis nahezu 100 Vol.-% Tetrahydrofuran und ergänzend zu 100 Vol.-% aromatischen Kohlenwasserstoff enthalten. Vorzugsweise enthält es 40 bis 60 Vol.-%, insbesondere 45 bis 55 Vol.-% Tetrahydrofuran und ergänzend zu 100 Vol.-% aromatischen Kohlenwasserstoff.

Man kann z.B. so verfahren, dass man Magnesium, wenig Iod und das Lösungsmittelgemisch vorlegt, auf eine Temperatur im Bereich 30 bis 80°C erhitzt, dann eine Bromverbindung der Formel (IIa) gelöst in dem selben Lösungsmittelgemisch bei einer Temperatur im Bereich 30 bis 80°C zudosiert und gegebenenfalls nach Beendigung der Dosierung noch z.B. 5 bis 60 Minuten am Rückfluss kocht. Die Zugabe des Phosphinsäurechlorids der Formel (II) erfolgt dann nicht in gelöster Form, sondern in Substanz, beispielsweise unter Kühlung auf Temperaturen im Bereich -10 bis +15°C. Abschließend kann man noch beispielsweise 30 bis 250 Minuten bei Temperaturen im Bereich 0 bis 30°C nachrühren.

Die Aufarbeitung des nach Durchführung der ersten Stufe vorliegenden Reaktionsgemisches kann beispielsweise so erfolgen, dass man es auf Eiswasser gießt, die organische Phase abtrennt, die wässrige Phase mit einem aromatischen Kohlenwasserstoff extrahiert, die organische Phase und das Extrakt vereinigt, mit verdünnter wässriger alkalischer Lösung und Wasser wäscht und einengt. Vorteilhafterweise strebt man eine möglichst konzentrierte Lösung des hergestellten Diphenylphosphinoxids der Formel (III) in dem aromatischen Kohlenwasserstoff an, aus der noch keine festen Bestandteile ausfallen. Erfindungsgemäß wird dann ein gesättigter aliphatischer Kohlenwasserstoff zugefügt und nach beispielsweise 5 bis 20 Stunden der gebildete, gut filtrierbare Niederschlag abfiltriert, gegebenenfalls mit dem gesättigten aliphatischen Kohlenwasserstoff nachgewaschen und getrocknet.

Man kann so ein Diphenylphosphinoxid der Formel (III) in Form eines weißen Pulvers in Ausbeuten von über 80 % und in Reinheiten von über 92 % erhalten. Durch den Verzicht auf die Zugabe des Phosphinsäurechlorids der Formel (II) in einem Lösungsmittel kann insgesamt mit weniger Lösungsmittel gearbeitet und so Lösungsmittel eingespart und eine höhere Raum-Zeit-Ausbeute erzielt werden.

In der zweiten Stufe kann man als Metallierungsmittel z.B. Butyllithium oder Lithiumdiisopropylamid einsetzen. Letzteres ist bevorzugt.

Man kann beispielsweise so verfahren, dass man das Diphenylphosphinoxid der Formel (III) in einem Lösungsmittel, z.B. Tetrahydrofuran, vorlegt, auf z.B. -25 bis 0°C abkühlt und bei dieser Temperatur das Metallierungsmittel, z.B. gelöst in Kohlenwasserstoffe enthaltendem Tetrahydrofuran so zudosiert, dass die Temperatur durch Kühlung im Bereich -25 bis 0°C gehalten werden kann. Man erhält so eine Lösung A. Separat davon kann man eine Lösung von Iod in beispielsweise Tetrahydrofuran herstellen und diese auch auf beispielsweise -25 bis 0°C abkühlen. Man erhält so eine Lösung B. Nunmehr legt man in einem Reaktionsgefäß etwas Lösungsmittel, z.B. Tetrahydrofuran bei beispielsweise -25 bis 0°C vor und dosiert dann bei beispielsweise -25 bis 0°C die Lösung A und die Lösung B gleichzeitig so zu, dass stets eine geringe Menge Iod im Überschuss vorhanden ist. Man kann dies leicht an der Farbe des Reaktionsgemisches kontrollieren. Dunkle Farben zeigen einen Iod-Überschuss an. Vorzugsweise hält man die Temperatur während der Reaktion bei -25°C bis -10°C. Zur Beendigung der Reaktion kann man nach der Zudosierung der Lösungen A und B gegebenenfalls noch beispielsweise 10 bis 150 Minuten bei beispielsweise -10 bis +10°C nachrühren. Danach noch vorhandenes überschüssiges Iod wird zweckmäßigerweise entfernt, z.B. durch Zusatz einer verdünnten wässrigen Lösung von Natriumthiosulfat.

Die Aufarbeitung des nach der Durchführung der zweiten Stufe vorliegenden Reaktionsgemisches kann beispielsweise so erfolgen, dass man zunächst die organische Phase abtrennt, die verbleibende wässrige Phase mit einem Extraktionsmittel, z.B. einem aromatischen Kohlenwasserstoff, extrahiert, die mit dem Extrakt vereinigte organische Phase gegebenenfalls mit Wasser wäscht und einengt. Man kann so 2-Iod-diphenylphosphinoxide der Formel (IV) in Ausbeuten von über 90 % und in Form von z.B. 15 bis 30 gew.-%igen Lösungen in einem aromatischen Kohlenwasserstoff erhalten. Derartige Lösungen können direkt in die dritte Verfahrensstufe eingesetzt werden.

Die erfindungsgemäß durchgeführte zweite Verfahrensstufe zeichnet sich durch die Anwendung von mit wenig technischem Aufwand einhaltbaren Temperaturen, verkürzten Dosierzeiten, Ausbeutesteigerungen und eine einfache Aufarbeitungsmöglichkeit aus.

In der dritten Stufe wird vorzugsweise ein dendritisches Kupfer eingesetzt wie es in Glossary of Terms Relating to Particle Technology, Ausgabe 1. Mai 1996, beschrieben ist. Derartiges Kupfer kann eine mittlere Partikelgröße von z.B. 1 bis 100 µm, vorzugsweise 30 bis 50 µm, eine Oberfläche von z.B. 0,04 bis 1 m²/g, vorzugsweise 0,07 bis 0,5 m²/g und eine Reinheit von über 99,5 %, vorzugsweise über 99,7 % aufweisen. Erfindungsgemäß einzusetzendes dendritisches Kupfer ist im Handel erhältlich.

Man kann beispielsweise so verfahren, dass man dentritisches Kupfer zusammen mit dem aromatischen Kohlenwasserstoff vorlegt und bei einer Temperatur von beispielsweise 70 bis 140°C die in der zweiten Stufe erhaltene Lösung eines 2-Iod-diphenylphosphinoxides der Formel (IV) zudosiert. Pro Mol 2-Iod-diphenylphosphinoxid der Formel (IV) kann man beispielsweise 1 bis 10 Mol, vorzugsweise 2 bis 8 Mol dendritisches Kupfer einsetzen. Gegebenenfalls kann man nach dem Ende der Zudosierung noch 1 bis 5 Stunden bei 70 bis 140°C nachrühren. Die Zudosier- und Nachrührzeit können zusammen beispielsweise 3 bis 8 Stunden betragen. Zur Aufarbeitung kann man z.B. das heiße Reaktionsgemisch filtrieren, den Filterkuchen mit einem Lösungsmittel, z.B. einem chlorierten Kohlenwasserstoff, waschen, die Waschlösung zur Trockene eindampfen, den dabei erhaltenen Feststoff dem Filtrat zufügen und dieses Gemisch auf Rückflusstemperatur erhitzen. Man kann den Filterkuchen auch mit einem z.B. auf 70 bis 140°C erhitzten aromatischen Kohlenwasserstoff nachwaschen, diese Waschlösung dem ersten Filtrat zusetzen und das Gemisch auf Rückflusstemperatur erhitzen. Gegebenenfalls kann man einem Teil des aromatischen Kohlenwasserstoffs, z.B. durch Destillation, entfernen. Beim Abkühlen auf beispielsweise 0 bis 25°C fällt dann das hergestellte racemische Bis-diphenylphosphinoxid der Formel (I) aus, das man z.B. durch Filtration und anschließender Trocknung, gegebenenfalls im Vakuum und bei erhöhter Temperatur, gewinnen kann.

Die erfindungsgemäß durchgeführte dritte Reaktionsstufe zeichnet sich durch den Einsatz kostengünstiger und weniger toxischer Lösungsmittel, durch eine einfache Aufarbeitung und kürzere Reaktionszeiten aus.

In der vierten Stufe kann man beispielsweise das racemische Bis-diphenylphosphinoxid der Formel (I) gelöst, z.B. in einem chlorierten Kohlenwasserstoff, mit einer Lösung eines reinen Enantiomeren der Dibenzoylweinsäure, z.B. in einem Ester, bei erhöhter Temperatur umsetzen und das Reaktionsgemisch langsam, z.B. im Verlaufe von 2 bis 6 Stunden, auf 10 bis 25°C abkühlen. Dabei fällt ein Salz aus, das man, z.B. durch Filtration abtrennen kann.

Das Salz kann man weiterverarbeiten, z.B. indem man es in einem aromatischen Kohlenwasserstoff aufnimmt, es mit verdünnter wässriger Säure und verdünnter wässriger Base wäscht, die organische Phase dann zum Sieden erhitzt und gerade soviel aromatischen Kohlenwasserstoff abdampft oder zufügt, dass in der Hitze eine nahezu gesättigte Lösung vorliegt. Nach dem Abkühlen, z.B. auf 10 bis 30°C, kann man die eine auskristallisierende enantiomerenreine Form des Bis-diphenylphosphinoxids der Formel (I) abtrennen. Man erhält das Produkt i.a. mit einem Enantiomerenüberschuss von ee über 99 %.

Das Filtrat aus der Aufarbeitung nach der Umsetzung mit einem reinen Enantiomeren der Dibenzoylweinsäure kann man zunächst in ähnlicher Weise aufarbeiten wie das mit einem aromatischen Kohlenwasserstoff aufgenommene Salz, beispielsweise indem man es direkt mit verdünnter Säure und danach mit verdünnter wässriger Base wäscht. Durch einen Lösungsmittelwechsel, z.B. auf einem aromatischen Kohlenwasserstoff, Einengen und Abkühlen kann man einen Feststoff erhalten, bei dem es sich um racemisches Einsatzmaterial handelt. Aus dem Filtrat aus der Abtrennung des racemischen Einsatzmaterials kann man durch weiteres Einengen und Abkühlen das zweite Enantiomer des Bis-phenylphosphinoxids der Formel (I) i.a. mit einem Enantiomerenüberschuss ee von über 99 % erhalten.

Die erfindungsgemäße vierte Verfahrensstufe zeichnet sich durch die Einsparung von ca. 50 % enantiomerenreiner Mono- oder Dicarbonsäure und eine einfache Aufarbeitung aus.

Wenn man erfindungsgemäß hergestelltes enantiomerenreines Bis-diphenylphosphinoxid der Formel (I) zu dem entsprechenden Bis-diphenylphosphin reduzieren will, kann man dies auf an sich bekannte Weise tun, beispielsweise mit Trichlorsilan als Reduktionsmittel gemäß der eingangs genannten Literatur.

### Beispiele

### Beispiel 1

### Herstellung von (4-Chlor-3-methoxyphenyl)-diphenylphosphinoxid

Unter Argon wurde 1 Mol Mg-Späne und eine Spatelspitze Iod in einer Mischung aus 100 ml Tetrahydrofuran und 100 ml Toluol auf 60°C erhitzt. Innerhalb von 10 Minuten wurden 200 g 5-Brom-2-chlor-anisol in einer Mischung aus 200 ml Tetrahydrofuran und 200 ml Toluol zugetropft. Während des Zutropfens wurde die Innentemperatur durch Kühlung auf 60°C gehalten. Nach Beendigung des Zutropfens wurde das Reaktionsgemisch auf Rückflusstemperatur erhitzt und 30 Minuten bei dieser Temperatur nachgerührt. Anschließend wurde auf 0°C abgekühlt und innerhalb von 45 Minuten 236,8 g Diphenylphosphinsäurechlorid zugetropft. Die Innentemperatur wurde dabei zwischen 0 und 5°C gehalten. Das Reaktionsgemisch wurde 5 Minuten bei 0°C nachgerührt, die Kühlung abgestellt und weitere 2 Stunden nachgerührt. Zur Aufarbeitung wurde das Reaktionsgemisch auf 1,61 1 Eiswasser gegeben, die organische Phase abgetrennt und die wässrige Phase noch zweimal mit je 400 ml Toluol gewaschen. Die vereinigten organischen Phasen wurden mit 400 ml 2,5 gew.-%iger wässriger Sodalösung und anschließend mit 400 ml Wasser gewaschen und anschließend am Rotationsverdampfer auf ein Volumen von 200 ml eingeengt. Nun wurden unter Rühren 300 ml n-Pentan zugetropft. Der über Nacht ausfallende Feststoff wurde abgesaugt, mit n-Pentan gewaschen und getrocknet. Es wurden 203,5 g eines weißen Feststoffs erhalten. Die Ausbeute betrug 82 %, die Reinheit 94 %.

### Beispiel 2

### Herstellung von (4-Chlor-2-iod-3-methoxyphenyl)-diphenylphosphinoxid

Die Reaktion wurde unter Schutzgasatmosphäre durchgeführt und peroxidfreies Tetrahydrofuran verwendet.

51,4 g (4-Chlor-3-methoxyphenyl)-diphenylphosphinoxid wurden in einem Reaktionsgefäß in 300 ml Tetrahydrofuran gelöst und auf -20°C abgekühlt. Zu dieser Lösung wurden 90 ml Lithiumdiisopropylamid in Form einer 2-molaren Lösung in einem Gemisch aus Tetrahydrofuran, Ethylbenzol und Hexan zugetropft. Das Zutropfen wurde so reguliert, dass die Innentemperatur bei -15°C gehalten werden konnte.

In einem anderen Reaktionsgefäß wurden 150 ml Tetrahydrofuran vorgelegt und auf - 20°C abgekühlt. Hierzu wurde gleichzeitig der Inhalt des ersten Reaktionsgefäßes und eine Lösung von 43,9 g Iod in 150 ml Tetrahydrofuran so zugetropft, dass die Innentemperatur bei -15°C gehalten werden konnte. Durch optische Kontrolle wurde sichergestellt, dass stets ein leichter Iod-Überschuss im Reaktionsgemisch vorhanden war.

Nachdem beide Lösungen vollständig zugetropft waren wurde das Reaktionsgefäß auf eine Innentemperatur von 0°C gebracht und 1 Stunde bei dieser Temperatur nachgerührt. Nun wurde das Reaktionsgemisch in eine ebenfalls auf 0°C gekühlte Lösung von 60 g Natriumthiosulfat in 500 ml Wasser gegeben und zusätzlich 250 ml Wasser zugesetzt.

Die organische Phase wurde abgetrennt und die wässrige Phase zwei Mal mit je 125 ml Toluol extrahiert. Die vereinigten organischen Phasen wurden mit 125 ml Wasser gewaschen und am Rotationsverdampfer auf ein Volumen von 250 ml eingeengt. Die so erhaltene Lösung hatte einen Gehalt von 24 Gew.-% (4-Chlor-2-iod-3-methoxyphenyl)-diphenylphosphinoxid, was einer Ausbeute von 93,5 % entspricht.

### Beispiel 3

### Herstellung von racemischem (5,5'-Dichloro-6,6'-dimethoxybiphenyl-2,2'-diyl)-bis-(diphenylphosphinoxid)

31,7 g dentritisches Kupferpulver mit einer mittleren Korngröße von 36 µm und einer Oberfläche von 0,13 m² wurden in 500 ml Toluol vorgelegt und auf Rückflusstemperatur geheizt. Im Verlaufe einer Stunde wurde eine Lösung von 0,128 Mol (4-Chlor-2-iod-3-methoxyphenyl)-diphenylphosphinoxid in 250 ml Toluol zugetropft. Das Reaktionsgemisch wurde 3 Stunden am Rückfluss gekocht und anschließend bei 100°C über Celite® filtriert und das Filtrat abgestellt. Der Filterkuchen wurde 3 mal mit je 100 ml Dichlormethan gewaschen, die Waschlösung am Rotationsverdampfer zur Trockene eingedampft und der zurückbleibende Feststoff dem Filtrat des Ansatzes zugefügt. Die dabei erhaltene Suspension wurde nun zum Rückfluss erhitzt, wobei der gesamte vorhandene Feststoff wieder in Lösung ging. Anschließend wurde langsam unter Rühren auf Raumtemperatur abgekühlt. Der nunmehr vorliegende Feststoff wurde abgesaugt und 2 mal mit jeweils 50 ml kaltem Toluol gewaschen. Anschließend wurde der Feststoff bei 50°C im Vakuum getrocknet. Es wurden 35,7 g eines weißen Feststoffs mit einem Gehalt von 83 Gew.-% des Produktes isoliert. Das entspricht einer Ausbeute von 68 %.

### Beispiel 4

### Spaltung von racemischem (5,5'-Dichloro-6,6'-dimethoxybiphenyl-2,2'-diyl)-bis-(dimethylphosphinoxid) in seine Enantiomere

0,06 Mol des Produktes aus Beispiel 3 wurden in 360 ml Methylenchlorid gelöst und auf Rückflusstemperatur erwärmt. Dann wurde eine Lösung von 10,8 g wasserfreier (+)-Dibenzoylweinsäure in 195 ml Essigsäureethylester zugetropft, wobei das Gemisch auf Rückflusstemperatur gehalten wurde. Nachdem alles zugegeben war wurde unter langsamem Rühren auf Raumtemperatur abkühlen gelassen und noch 1 Stunde nachgerührt (insgesamt 4 Stunden). Das ausgefallene Salz wurde abfiltriert und 2 mal mit je 30 ml einer Mischung aus Methylenchlorid/Essigsäureethylester 2:1 gewaschen.

Das Salz wurde aufgearbeitet, indem es zunächst in 100 ml Toluol aufgenommen und 2 mal mit je 200 ml 1n wässriger Natronlauge extrahiert wurde. Durch kurzzeitiges Erwärmen wurde der in der organischen Phase vorliegende Feststoff in Lösung gebracht. Anschließend wurde die organische Phase mit jeweils 200 ml 1n wässriger Salzsäure, 1n wässriger Natronlauge und Wasser gewaschen. Am Rotationsverdampfer wurden dann 64,5 g Toluol abdestilliert. Die entstandene Suspension wurde zum Rückfluss erhitzt und soviel Toluol zugegeben, wie benötigt wurde, um allen vorhandenen Feststoff zu lösen. Danach wurde die Lösung auf Raumtemperatur abgekühlt und das auskristallisierende Produkt abfiltriert und getrocknet. So wurde (+)-(5,5'-dichloro-6,6'-dimethylbiphenyl-2,2'-diyl)-bis-(diphenylphosphinoxid) in einer Ausbeute von 32 % und in einer Enantiomerenreinheit von 99,2 % erhalten.

Das Filtrat, das nach Abtrennung des Salzes aus der Umsetzung mit (+)-Dibenzoylweinsäure erhalten wurde, wurde 2 mal mit je 200 ml in wässriger Natronlauge gewaschen. Anschließend wurde die organische Phase mit jeweils 200 ml In wässriger Salzsäure, 1n wässriger Natronlauge und Wasser gewaschen. Es wurde auf eine Menge von 250 g eingeengt, dann 180 g Toluol zugegeben und erneut auf eine Menge von 125 g eingeengt. Die dann vorliegende Lösung wurde auf Raumtemperatur abgekühlt und der ausfallende Feststoff filtriert. Er wurde getrocknet und so 28 Gew.-% des racemischen Einsatzmaterials wieder gewonnen.

Vom Filtrat der Abtrennung des racemischen Einsatzmaterials wurden am Rotationsverdampfer 60 g Toluol abdestilliert. Dabei entstand eine Suspension, die zum Rückfluss erhitzt und so viel Toluol zugegeben wurde wie notwendig war, dass der gesamte Feststoff gerade wieder in Lösung ging. Die Lösung wurde erneut auf Raumtemperatur abgekühlt und das dabei auskristallisierende Produkt abfiltriert und getrocknet. So wurde in einer Ausbeute von 26 % (-)-5,5'-dichloro-6,6'-dimethoxybiphenyl-2,2'-diyl)-bis-(diphenylphosphinoxid) in einer Enantiomerenreinheit von 99,8 % isoliert.

Die gesamte Wiederfindung des eingesetzten racemischen Ausgangsprodukts betrug somit 86 %.

### Beispiel 5 (nicht erfindungsgemäß)

Reduktion des in Beispiel 4 erhaltenen (+)-(5,5'-Dichloro-6,6'-dimethoxybiphenyl-2,2'-diyl)-bis-(diphenylphosphinoxids) zum entsprechenden Phosphin.

Zu einer Lösung von 13,5 mmol (+)-(5,5'-Dichloro-6,6'-dimetlioxybiphenyl-2,2'-diyl)-bis-(diphenylphosphinoxid) in 100 ml Xylol (gereinigtes Isomerengemisch) wurden 32 ml Tributylamin hinzugefügt, das Gemisch unter Argonatmosphäre auf 110°C erhitzt und bei dieser Temperatur eine Lösung von 13,6 g Trichlorsilan in 50 ml Xylol (gereinigtes Isomerengemisch) im Verlaufe einer halben Stunde zugetropft. Es wurde 3 Stunden unter Rückfluss erhitzt. Anschließend wurde die Lösung auf Raumtemperatur abgekühlt, 290 ml Methylenchlorid zugesetzt, dann auf 0°C abgekühlt und bei dieser Temperatur so viel 10 gew.-%ige wässrige Natronlauge zugefügt bis ein pH-Wert von 10 erreicht war. Die entstehende Suspension wurde unter einer Schutzgasfritte, die mit 5 g Aluminiumoxid gefüllt war, filtriert. Die organische Phase wurde in einen zweiten Kolben überführt und die wässrige Phase mit 290 ml Methylenchlorid extrahiert. Die vereinigten Methylenchloridphasen wurden unter Argon 2 mal mit 250 ml Wasser gewaschen. Die organische Phase wurde dann im Vakuum auf ein Volumen von 100 ml eingeengt. Beim Einengen beginnt bereits die Kristallisation des Produktes. Die Suspension wurde über Nacht bei 5°C aufbewahrt, anschließend abgesaugt und das Festprodukt im Vakuum getrocknet. Es wurden 7,4 g eines hellgelben Feststoffes mit einem Gehalt von 95,5 % (+)-(5,5'-Dichloro-6,6'-dimethoxybiphenyl-2,2'-diyl)-bis-(diphenylphosphin) erhalten. Das entspricht einer Ausbeute von 89 %.

## Patentansprüche

1. Verfahren zur Herstellung von enantiomerenreinen Bis-diphenylphosphinoxiden der Formel (I) 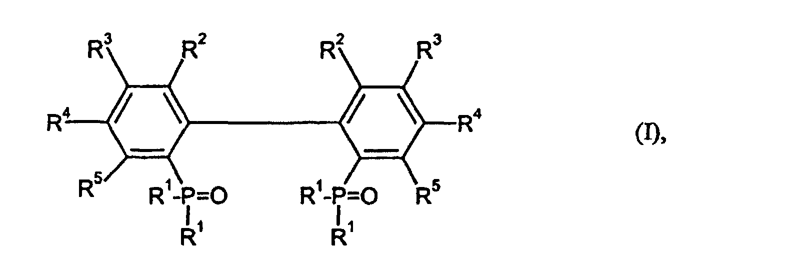 in der
R¹ für Phenyl, Naphthyl, Heteroaryl mit 4 oder 5 C-Atomen und 1 oder 2 Heteroatomen aus der Gruppe Stickstoff, Sauerstoff und Schwefel oder Cyclohexyl steht, die gegebenenfalls mit R', OR', NO₂, NH₂, NHR' oder NR'₂ substituiert sein können, wobei R' jeweils C₁-C₆-Alkyl bedeutet,
R² für C₁-C₄-Alkoxy steht,
R³ für Waserstoff, Fluor, Chlor oder Brom steht und
R⁴ und R⁵ unabhängig voneinander für Wasserstoff, Fluor, Chlor, Brom, C₁-C₆-Alkyl oder C₁-C₆-Alkoxy stehen,
bei dem man in einer ersten Stufe eine Bromverbindung der Formel 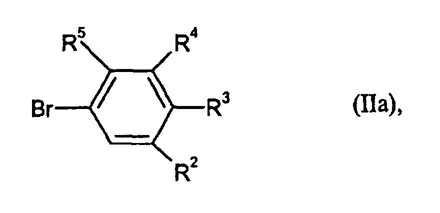 in der
R² bis R⁵ die bei Formel (I) angegebenen Bedeutungen haben,
nach einer selektiven Monometallierung mit einem Diphenylphosphinsäurechlorid der Formel (II) umsetzt 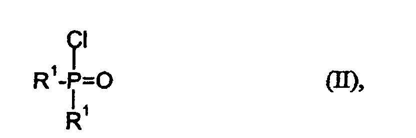 in der
R¹ die bei Formel (I) angegebene Bedeutung hat,
so ein Diphenylphosphinoxid der Formel (III) erhält 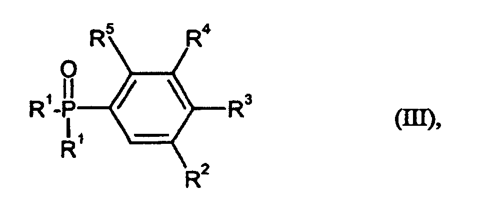 in der
R¹ bis R⁵ die bei Formel (I) angegebenen Bedeutungen haben,
dieses in einer zweiten Stufe in 6-Position metalliert, mit Iod umsetzt und so ein 2-Iod-diphenylphosphinoxid der Formel (IV) erhält 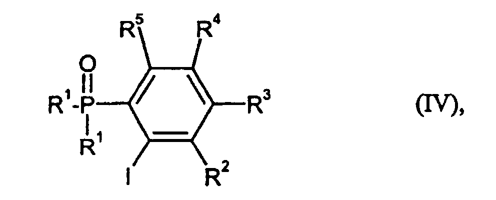 in der
R¹ bis R⁵ die bei Formel (I) angegebenen Bedeutungen haben,
dieses in einer dritten Stufe mit Kupfer in ein racemisches Bis-diphenylphosphinoxid der Formel (I) überführt und in einer vierten Stufe das racemische Bis-diphenylphosphinoxid der Formel (I) durch Kristallisation mit enantiomerenreinen Mono- oder Dicarbonsäuren in seine Enantiomere auftrennt,
**dadurch gekennzeichnet, dass** man
in der ersten Stufe als Lösungsmittel ein Gemisch von Tetrahydrofuran und einem aromatischen Kohlenwasserstoff und das Diphenylphosphinsäurechlorid der Formel (II) ohne Lösungsmittel einsetzt und das hergestellte Diphenylphosphinoxid der Formel (III) aus einer Lösung in einem aromatischen Kohlenwasserstoff durch Zusatz eines gesättigten aliphatischen Kohlenwasserstoffs isoliert,
in der zweiten Stufe Temperaturen von nicht tiefer als -25°C anwendet, das metallierte Diphenylphosphinoxid der Formel (III) und Iod simultan so eindosiert, dass stets eine geringe Menge Iod im Überschuss vorhanden ist, und das hergestellte 2-Iod-diphenylphosphinoxid gelöst in einem aromatischen Kohlenwasserstoff abtrennt,
in der dritten Stufe dendritisches Kupfer und als Lösungsmittel einen aromatischen Kohlenwasserstoff einsetzt und das hergestellte racemische Bis-diphenylphosphinoxid der Formel (I) aus einer Lösung in einem aromatischen Kohlenwasserstoff kristallisiert und
in der vierten Stufe eine enantiomerenreine Mono- oder Dicarbonsäure einsetzt, das erste Enantiomer durch Kristallisation aus einer Lösung in einem aromatischen Kohlenwasserstoff und das zweite Enantiomer durch Hydrolyse und anschließende Kristallisation aus einer Lösung in einem aromatischen Kohlenwasserstoff gewinnt.

2. Verfahren nach Anspruch 1, **dadurch gekennzeichnet, dass** in den Formeln (I) bis (IV) R¹ für unsubstituiertes Phenyl, unsubstituiertes Naphthyl, Heteroaryl mit 4 oder 5 C-Atomen und 1 oder 2 Heteroatomen aus der Gruppe Sauerstoff und Schwefel oder unsubstituiertes Cyclohexyl steht und in den Formeln (I), (IIa), (III) und (IV) R² für Methoxy, R³ für Fluor, Chlor und R⁴ und R⁵ für Wasserstoff stehen.

3. Verfahren nach Ansprüchen 1 bis 2, **dadurch gekennzeichnet, dass** es sich bei den aromatischen Kohlenwasserstoffen um Benzol, Toluol oder Xylole handelt.

4. Verfahren nach Ansprüchen 1 bis 3, **dadurch gekennzeichnet, dass** es sich bei den gesättigten aliphatischen Kohlenwasserstoffen um geradkettige oder verzweigte Pentane, Hexane oder Octane handelt.

5. Verfahren nach Ansprüchen 1 bis 4, **dadurch gekennzeichnet, dass** man in der ersten Stufe bezogen auf 1 Mol Bromverbindung der Formel (IIa) 1 bis 1,5 Mol Magnesium und als Lösungsmittel ein Gemisch aus 20 bis nahezu 100 Vol.-% Tetrahydrofuran und ergänzend zu 100 Vol.-% einen aromatischen Kohlenwasserstoff einsetzt und 5 bis 20 Stunden nach Zugabe des gesättigten aliphatischen Kohlenwasserstoffs den gebildeten Niederschlag abfiltriert.

6. Verfahren nach Ansprüchen 1 bis 5, **dadurch gekennzeichnet, dass** man in der zweiten Stufe das Diphenylphosphinoxid der Formel (III) bei -25°C bis 0°C in Tetrahydrofuran metalliert, separat davon eine Lösung von Iod in Tetrahydrofuran herstellt, beide Lösungen bei -25°C bis 0°C so in vorgelegtes Tetrahydrofuran zudosiert, dass stets eine geringe Menge Iod im Überschuss vorhanden ist, anschließend überschüssiges Iod entfernt und 2-Ioddiphenylphosphinoxide der Formel (IV) in Form von 15 bis 30 gew.-%igen Lösungen in einem aromatischen Kohlenwasserstoff abtrennt.

7. Verfahren nach Ansprüchen 1 bis 6, **dadurch gekennzeichnet, dass** man in der dritten Stufe dendritisches Kupfer mit einer mittleren Partikelgröße von 1 bis 100 µm, eine Oberfläche von 0,04 bis 1 m²/g und einer Reinheit von über 99,5 % einsetzt, das dendritische Kupfer zusammen mit aromatischem Lösungsmittel vorlegt und bei 70 bis 140°C die in der zweiten Stufe erhaltene Lösung des 2-Iod-diphenylphosphinoxids der Formel (IV) zusetzt, pro Mol 2-Iod-diphenylphosphinoxid der Formel (IV) 1 bis 10 Mol dentritisches Kupfer verwendet, eine Zudosier- und Nachrührzeit von zusammen 3 bis 8 Stunden anwendet und racemisches Bis-diphenylphosphinoxid der Formel (I) durch Abkühlung auf 0 bis 25°C kristallisiert.

8. Verfahren nach Ansprüchen 1 bis 7, **dadurch gekennzeichnet, dass** man in der vierten Stufe das racemische Bis-diphenylphosphinoxid der Formel (I) gelöst in einem chlorierten Kohlenwasserstoff mit einer enantiomerenreinen Dibenzoylweinsäure, gelöst in einem Ester, bei erhöhter Temperatur umsetzt und : durch Abkühlung einer Lösung in einem aromatischen Kohlenwasserstoff auf 0°C bis 30°C die eine enantiomerenreine Form des Bis-diphenylphosphinoxids der Formel (I) gewinnt.

9. Verfahren nach Anspruch 8, **dadurch gekennzeichnet, dass** man aus dem Filtrat aus der Aufarbeitung nach der Umsetzung mit einer enantiomerenreinen Dibenzoylweinsäure eine Lösung in einem aromatischen Kohlenwasserstoff herstellt, aus dieser durch Einengen und Abkühlen zunächst racemisches Einsatzmaterial und durch weiteres Einengen und Abkühlen die andere enantiomerenreine Form des Bis-diphenylphosphinoxids der Formel (I) gewinnt.

## Claims

1. Process for the preparation of enantiomerically pure bis-diphenylphosphine oxides of the formula (I) 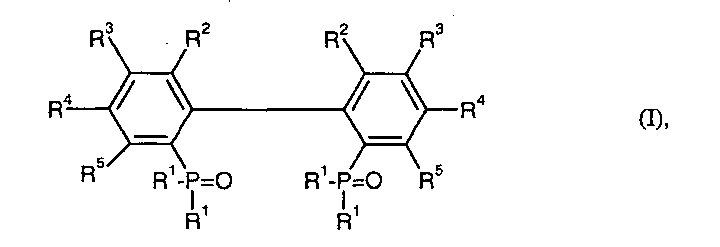 in which
R¹ is phenyl, naphthyl, heteroaryl having 4 or 5 carbon atoms and 1 or 2 heteroatoms from the group nitrogen, oxygen and sulphur, or cyclohexyl, which may optionally be substituted by R', OR', NO₂, NH₂, NHR' or NR'₂, where R' is in each case C₁-C₆-alkyl,
R² is C₁-C₄-alkoxy,
R³ is hydrogen, fluorine, chlorine or bromine and
R⁴ and R⁵, independently of one another, are hydrogen, fluorine, chlorine, bromine, C₁-C₆-alkyl or C₁-C₆-alkoxy,
in which, in a first stage, a bromine compound of the formula 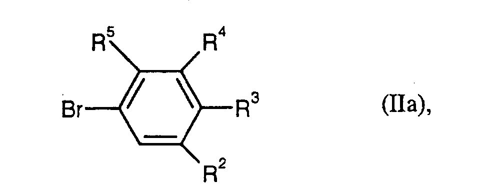 in which
R² to R⁵ have the meanings given for formula (I),
is reacted after a selective monometalation with a diphenylphosphinic chloride of the formula (II) 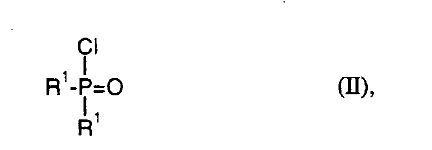 in which
R¹ has the meaning given for formula (I),
giving a diphenylphosphine oxide of the formula (III) 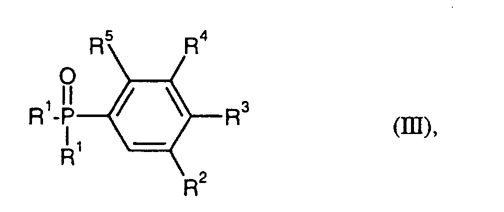 in which
R¹ to R⁵ have the meanings given in formula (I),
which, in a second stage, is metalated in the 6-position and reacted with iodine to give a 2-iodo-diphenylphosphine oxide of the formula (IV) 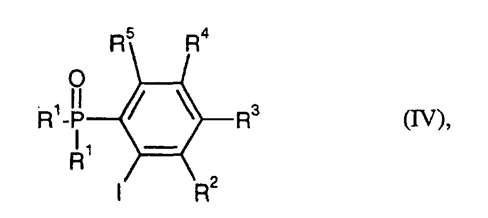 in which
R¹ to R⁵ have the meanings given for formula (I),
which, in a third stage, is converted with copper into a racemic bis-diphenylphosphine oxide of the formula (I) and, in a fourth stage, the racemic bis-diphenylphosphine oxide of the formula (I) is separated into its enantiomers by crystallization with enantiomerically pure mono- or dicarboxylic acids,
**characterized in that**,
in the first stage, the solvent used is a mixture of tetrahydrofuran and an aromatic hydrocarbon, and the diphenylphosphinic chloride of the formula (II) is used without solvents, and the prepared diphenylphosphine oxide of the formula (III) is isolated from a solution in an aromatic hydrocarbon by adding a saturated aliphatic hydrocarbon,
in the second stage, temperatures of not less than -25°C are used, the metalated diphenylphosphine oxide of the formula (III) and iodine are metered in simultaneously such that a small amount of iodine is always present in excess, and the prepared 2-iodo-diphenylphosphine oxide is separated off in dissolved form in an aromatic hydrocarbon,
in the third stage, dendritic copper and, as solvent, an aromatic hydrocarbon are used, and the prepared racemic bis-diphenylphosphine oxide of the formula (I) is crystallized from a solution in an aromatic hydrocarbon and,
in the fourth stage, an enantiomerically pure mono- or dicarboxylic acid is used, the first enantiomer is obtained by crystallization from a solution in an aromatic hydrocarbon, and the second enantiomer is obtained by hydrolysis and subsequent crystallization from a solution in an aromatic hydrocarbon.

2. Process according to Claim 1, **characterized in that**, in the formulae (I) to (IV), R¹ is an unsubstituted phenyl, unsubstituted naphthyl, heteroaryl having 4 or 5 carbon atoms and 1 or 2 heteroatoms from the group consisting of oxygen or sulphur, or unsubstituted cyclohexyl, and in the formulae (I), (IIa), (III) and (IV), R² is methoxy, R³ is fluorine or chlorine and R⁴ and R⁵ are hydrogen.

3. Process according to Claims 1 to 2, **characterized in that** the aromatic hydrocarbons are benzene, toluene or xylenes.

4. Process according to Claims 1 to 3, **characterized in that** the saturated aliphatic hydrocarbons are straight-chain or branched pentanes, hexanes or octanes.

5. Process according to Claims 1 to 4, **characterized in that**, in the first stage, based on 1 mol of bromine compound of the formula (IIa), 1 to 1.5 mol of magnesium are used, and the solvent used is a mixture of 20 to virtually 100% by volume tetrahydrofuran and additionally add 100% by volume of an aromatic hydrocarbon, and 5 to 20 hours after the addition of the saturated aliphatic hydrocarbon, the precipitate formed is filtered off.

6. Process according to Claims 1 to 5, **characterized in that**, in the second stage, the diphenylphosphine oxide of the formula (III) is metalated at -25°C to 0°C in tetrahydrofuran, a solution of iodine in tetrahydrofuran is prepared separately, the two solutions are metered in to the initial charge of tetrahydrofuran at -25°C to 0°C such that a slight amount of iodine is always present in excess, then excess iodine is removed and 2-iodo-diphenylphosphine oxides of the formula (IV) are separated off in the form of 15 to 30% strength by weight solutions in an aromatic hydrocarbon.

7. Process according to Claims 1 to 6, **characterized in that**, in the third stage, dendritic copper with an average particle size of from 1 to 100 µm, a surface area of from 0.04 to 1 m²/g and a purity of more than 99.5% is used, the dendritic copper is initially introduced together with aromatic solvent and, at 70 to 140°C, the solution of 2-iodo-diphenylphosphine oxide of the formula (IV) obtained in the second stage is added, 1 to 10 mol of dendritic copper is used per mole of 2-iodo-diphenylphosphine oxide of the formula (IV), a metered addition and after-stirring period of in total 3 to 8 hours is used, and racemic bis-diphenylphosphine oxide of the formula (I) is crystallized by cooling to 0 to 25°C.

8. Process according to Claims 1 to 7, **characterized in that**, in the fourth stage, the racemic bis-diphenylphosphine oxide of the formula (I), dissolved in a chlorinated hydrocarbon, is reacted with an enantiomerically pure dibenzoyltartaric acid, dissolved in an ester, at elevated temperature and, by cooling a solution in an aromatic hydrocarbon to 0°C to 30°C, the one enantiomerically pure form of the bis-diphenylphosphine oxide of the formula (I) is obtained.

9. Process according to Claim 8, **characterized in that**, from the filtrate from the work-up following the reaction with an enantiomerically pure dibenzoyltartaric acid, a solution in an aromatic hydrocarbon is prepared from which, by concentration by evaporation and cooling, firstly racemic feed material is obtained, and by further concentration by evaporation and cooling, the other enantiomerically pure form of the bis-diphenylphosphine oxide of the formula (I) is obtained.

## Revendications

1. Procédé pour la préparation d'oxydes de bis-diphénylphosphine de formule (I), à l'état d'énantiomère pur 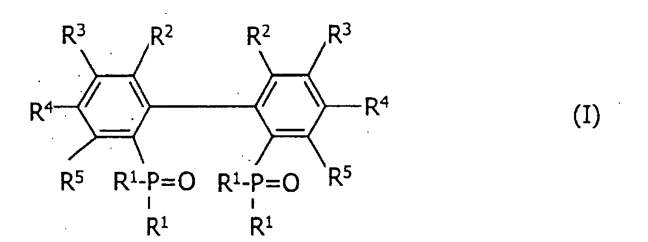 dans laquelle
R¹ représente un groupe phényle, naphtyle, hétéroaryle à 4 ou 5 atomes de carbone et 1 ou 2 hétéroatomes choisi parmi l'azote, l'oxygène et le soufre, ou un groupe cyclohexyle, ces groupes pouvant le cas échéant porter des substituants R', OR', NO₂, NH₂, NHR' ou NR'₂, R' représentant dans tous les cas un groupe alkyle en C₁-C₆,
R² représente un groupe alcoxy en C₁-C₄,
R³ représente l'hydrogène, le fluor, le chlore ou le brome et
R⁴ et R⁵ représentent chacun, indépendamment l'un de l'autre, l'hydrogène, le fluor, le chlore, le brome, un groupe alkyle en C₁-C₆ ou alcoxy en C₁-C₆,
selon lequel, dans un premier stade, on fait réagir un dérivé bromé de formule 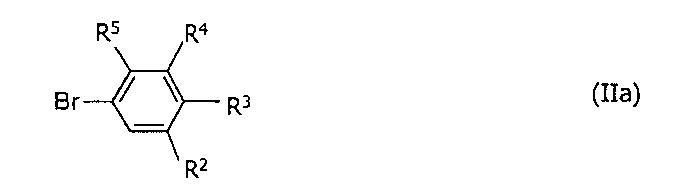 dans laquelle
R² à R⁵ ont les significations indiquées en référence à la formule (I),
après une monométallisation sélective, avec un chlorure d'acide diphénylphosphinique de formule (II) 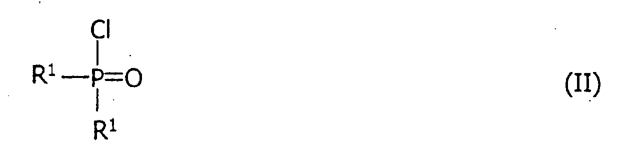 dans laquelle
R¹ a les significations indiquées en référence à la formule (I),
ce qui donne un oxyde de diphénylphosphine de formule (III) 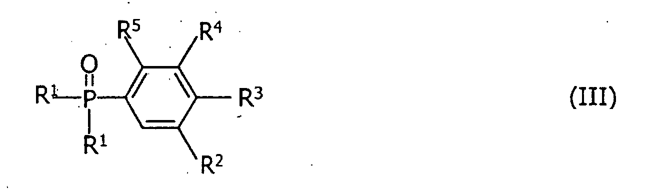 dans laquelle
R¹ à R⁵ ont les significations indiquées en référence à la formule (I),
qu'on métallise dans un deuxième stade, en position 6, après quoi on fait réagir avec l'iode, ce qui donne un oxyde de 2-iodo-diphénylphosphine de formule (IV) 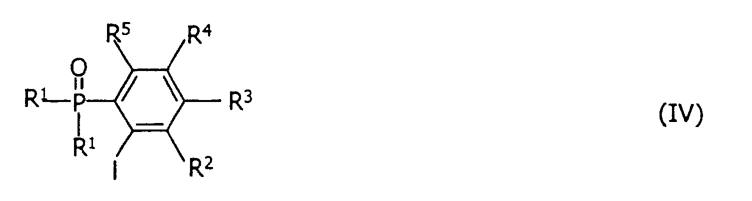 dans laquelle
R¹ à R⁵ ont les significations indiquées en référence à la formule (I),
qu'on convertit dans un troisième stade, à l'aide du cuivre, en un oxyde de bis-diphénylphosphine racémique de formule (I), lequel, dans un quatrième stade, est séparé en ses énantiomères par cristallisation avec des acides mono- ou di-carboxyliques à l'état d'énantiomères purs,
ce procédé **se caractérisant en ce que**
au premier stade, on utilise en tant que solvant un mélange de tétrahydrofuranne et d'un hydrocarbure aromatique et on met en oeuvre le chlorure d'acide diphénylphosphinique de formule (II) sans solvant, puis on isole l'oxyde de diphénylphosphine de formule (III) ainsi obtenu à partir d'une solution dans un hydrocarbure aromatique par addition d'un hydrocarbure aliphatique saturé,
au deuxième stade, on applique des températures qui ne descendent pas au-dessous de -25°C, on introduit l'oxyde de diphénylphosphine métallisé de formule (III) et l'iode simultanément en veillant à ce qu'il y ait toujours un léger excès d'iode, et on sépare l'oxyde de 2-iodo-diphénylphosphine ainsi obtenu à l'état de solution dans un hydrocarbure aromatique,
au troisième stade, on utilise du cuivre dendritique et, en tant que solvant, un hydrocarbure aromatique et on fait cristalliser l'oxyde de bis-diphénylphosphine racémique de formule (I) ainsi obtenu à partir d'une solution dans un hydrocarbure aromatique, et
au quatrième stade, on utilise un acide mono- ou di-carboxylique à l'état d'énantiomère pur, on isole le premier énantiomère par cristallisation à partir d'une solution dans un hydrocarbure aromatique et le deuxième énantiomère par hydrolyse suivie d'une cristallisation à partir d'une solution dans un hydrocarbure aromatique.

2. Procédé selon la revendication 1, **caractérisé en ce que**, dans les formules (I) à (IV), R¹ représente un groupe phényle non substitué, naphtyle non substitué, hétéroaryle à 4 ou 5 atomes de carbone et 1 ou 2 hétéroatomes du groupe consistant en l'oxygène ou le soufre, ou bien un groupe cyclohexyle non substitué, et dans les formules (I), (IIa) (III) et (IV), R² représente un groupe méthoxy, R³ le fluor ou le chlore et R⁴ et R⁵ l'hydrogène.

3. Procédé selon les revendications 1 à 2, **caractérisé en ce que** les hydrocarbures aromatiques en question sont le benzène, le toluène ou les xylènes.

4. Procédé selon les revendications 1 à 3, **caractérisé en ce que** les hydrocarbures aliphatiques saturés sont des pentanes, hexanes ou octanes à chaînes droites ou ramifiées.

5. Procédé selon les revendications 1 à 4, **caractérisé en ce que**, au premier stade, pour 1 mol du dérivé bromé de formule (IIa), on utilise 1 à 1,5 mol de magnésium et, en tant que solvant, un mélange de 20 à presque 100 % en volume de tétrahydrofuranne, le complément à 100 % en volume consistant en un hydrocarbure aromatique et on filtre le précipité formé 5 à 20 h après l'addition de l'hydrocarbure aliphatique saturé.

6. Procédé selon les revendications 1 à 5, **caractérisé en ce que**, au deuxième stade, on métallise l'oxyde de diphénylphosphine de formule (III) à une température de -25 à 0°C dans le tétrahydrofuranne, on prépare séparément une solution d'iode dans le tétrahydrofuranne, on ajoute les deux solutions à des températures de -25 à 0°C dans du tétrahydrofuranne en veillant à ce qu'il y ait toujours un léger excès d'iode, on élimine ensuite l'excès d'iode et on sépare les oxydes de 2-iodo-diphénylphosphine de formule (IV) à l'état de solutions à des concentrations de 15 à 30 % en poids dans un hydrocarbure aromatique.

7. Procédé selon les revendications 1 à 6, **caractérisé en ce que**, au troisième stade, on utilise du cuivre dendritique à une dimension de particule moyenne de 1 à 100 µm, une surface de 0,04 à 1 m²/g, et une pureté supérieure à 99,5 %, on part du cuivre dendritique et d'un solvant aromatique et on ajoute à une température de 70 à 140°C la solution de l'oxyde de 2-iodo-diphénylphosphine de formule (IV) obtenue au deuxième stade, on utilise 1 à 10 mol de cuivre dendritique par mole de l'oxyde de 2-iodo-diphénylphosphine de formule (IV), on observe une durée d'addition et d'agitation complémentaire de 3 à 8 h au total et on fait cristalliser l'oxyde de bis-diphénylphosphine racémique de formule (I) par refroidissement à une température de 0 à 25°C.

8. Procédé selon les revendications 1 à 7, **caractérisé en ce que**, au quatrième stade, on fait réagir l'oxyde de bis-diphénylphosphine racémique de formule (I) en solution dans un hydrocarbure chloré avec un acide dibenzoyltartrique à l'état d'énantiomère pur en solution dans un ester, à chaud, et on isole l'oxyde de bis-diphénylphosphine de formule (I) à l'état d'énantiomère pur par refroidissement d'un solution dans un hydrocarbure aromatique à une température de 0 à 30°C.

9. Procédé selon revendication 8, **caractérisé en ce que**, à partir du filtrat obtenu après la réaction avec un acide dibenzoyltartrique à l'état d'énantiomère pur, on prépare une solution dans un hydrocarbure aromatique, et à partir de celle-ci, par concentration et refroidissement, on récupère d'abord du produit de départ racémique et, par une nouvelle concentration et un nouveau refroidissement, l'autre forme énantiomère pure de l'oxyde de bis-diphénylphosphine de formule (I).
